# FASCICULE DE BREVET EUROPEEN

(11) **EP 2 473 312 B1**
(45) Date de publication et mention de la délivrance du brevet: **08.07.2015**
(21) Numéro de dépôt: 10752017.3
(22) Date de dépôt: 15.07.2010
(51) Int. Cl.: B23K 26/02

(54) **DISPOSITIF DE SOUDAGE LASER ET APPLICATION DE CE DISPOSITIF AU SOUDAGE D'UN PAVILLON EN TOLE OU D'UN SUPPORT DE PAVILLON VITRE AU COTE D'HABITACLE D'UN VEHICULE AUTOMOBILE**
VORRICHTUNG ZUM LASERSCHWEISSEN UND DEREN ANWENDUNG ZUM VERSCHWEISSEN EINES DACHBLECHES ODER EINES GLASDACHTRÄGERS MIT DER KRAFTFAHRZEUGINNENRAUMSEITE
LASER WELDING DEVICE AN USE THEREOF FOR WELDING A ROOF TOP SHEET OR A GLAS ROOF SUPPORT TO A CAR BODY SIDE

(30) Priorité: 03.09.2009 FR 0956016
(43) Date de publication de la demande: 11.07.2012
(73) Titulaire: Peugeot Citroën Automobiles Société Anonyme, 78140 Vélizy Villacoublay (FR)
(72) Inventeur: GELABERT ARRIETA, Ignacio, E-28914 Leganés (ES); MORISSET, Philippe, F-35740 Pace (FR); RIVIERE, Séverine, F-35580 Lassy (FR)
(74) Mandataire: Fernandez, Francis Lionel
(86) Numéro de dépôt international: PCT/FR2010/051485
(87) Numéro de publication internationale: WO 2011/027055

(56) Documents cités:
- WO-A2-2005/107996
- DE-A1- 4 233 159
- JP-A- 8 090 264

## Description

La présente invention concerne un dispositif de soudage laser pour assembler par soudo-brasage une première pièce en tôle à une seconde pièce en tôle, tel que décrit dans le document DE-A-42 33 159.

L'invention concerne également l'application d'un tel dispositif de soudage laser au soudage du pavillon d'un véhicule automobile, en particulier du support en tôle d'un pavillon vitré et du pavillon arrière en tôle le long du côté d'habitacle du véhicule.

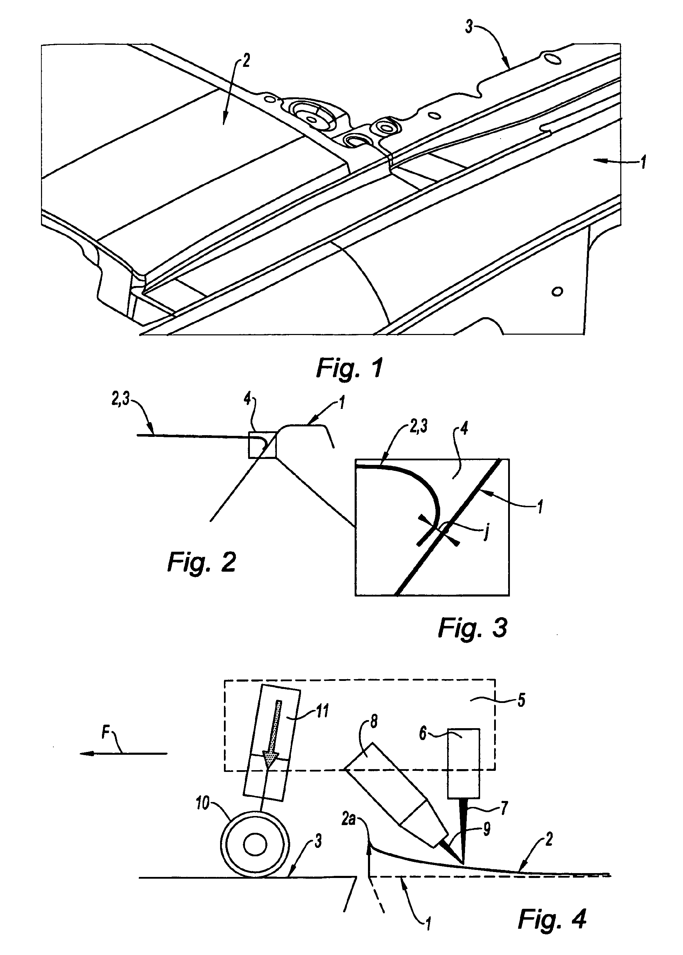

La figure 1 est une vue en perspective partielle du dessus d'un véhicule automobile montrant un côté d'habitacle 1 du véhicule, un pavillon arrière en tôle 2 et un support 3 pour supporter un panneau en verre s'étendant entre le pare-brise et le pavillon arrière en tôle 2.

Pour assembler le pavillon arrière en tôle 2 et le support 3 du panneau vitré au côté d'habitacle 1, on doit réaliser un cordon de soudage le long d'une ligne de jonction entre le pavillon 2, le support 3 et le côté d'habitacle 1.

La vue en coupe transversale de la figure 2 montre schématiquement la jonction 4 entre le côté d'habitacle 1 et le pavillon arrière 2 ou le support 3.

Pour garantir une bonne soudure, le jeu j (voir vue agrandie de la figure 3) doit être compris entre 0 et 0,3 mm.

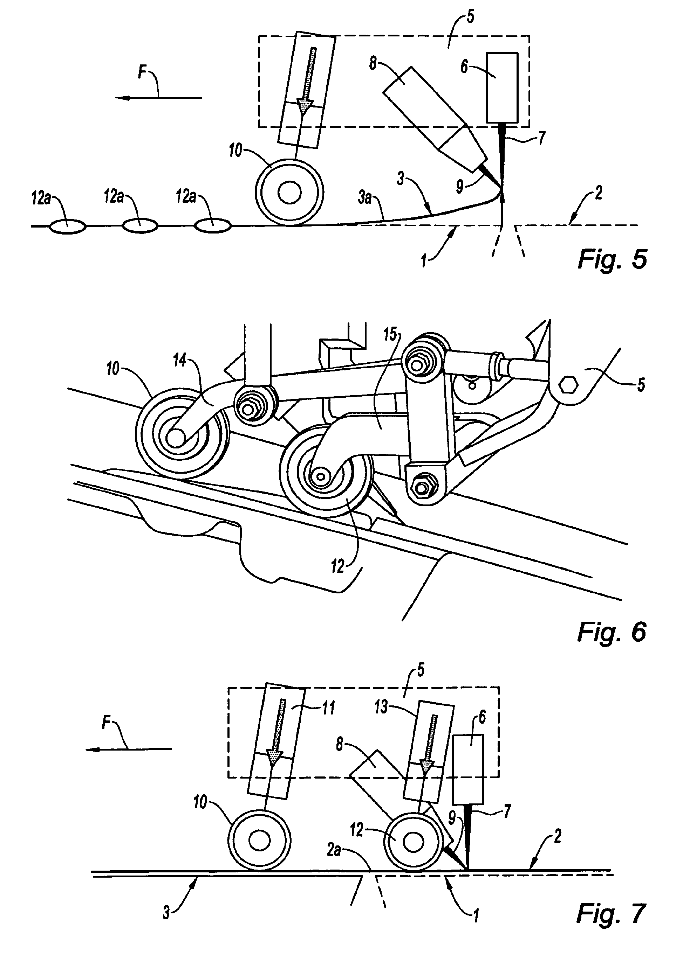

Pour assembler par soudage, le pavillon 2 ou le support 3 ci-dessus, au côté d'habitacle, la demanderesse a procédé à divers essais en utilisant un dispositif de soudage laser, tel que schématisé sur les figures 4 et 5.

Ce dispositif de soudage laser comprenait un bâti 5 supportant une tête 6 émettrice d'un faisceau laser 7 et une buse 8 d'apport de fil de soudage 9, adaptés pour réaliser un cordon de soudage le long d'une ligne de jonction entre le pavillon arrière 2 ou le support 3 et le côté d'habitacle 1.

Le bâti 5 porte en outre un galet presseur 10 adapté pour presser le bord du pavillon 2 ou le bord du support 3 contre le bord du côté d'habitacle 1.

Comme montré sur les figures 4 et 5, le galet presseur 10 est situé en amont du faisceau laser 7 relativement au sens F de déplacement du faisceau laser le long de la ligne de jonction évoquée ci-dessus.

Dans cet exemple, la distance comprise entre le faisceau laser 7 et le galet 10 était égale à 150 mm.

La figure 4 montre que du fait de la position du galet 10, lorsque le faisceau laser 7 est situé à une certaine distance du bord avant 2a du pavillon arrière 2, le galet 10 est déjà en appui sur le support 3.

Etant donné que la partie du pavillon 2 située en arrière de son bord avant 2a n'est plus sollicitée par le galet 10, cette partie du pavillon 2 se soulève, de sorte que le soudage réalisé est défectueux.

L'exemple illustré par la figure 5 montre qu'une partie du support 2 du panneau vitré est soudé au côté d'habitacle 1 par des points de soudure 12a et il reste une zone 3a située à l'arrière du support 3, à souder au moyen du dispositif de soudage laser.

Ainsi, lorsque le galet 10 atteint la zone déjà soudée par points 12a, la zone arrière 3a du support 3 se soulève, de sorte que le faisceau laser 7 n'est pas en mesure d'effectuer une soudure correcte avec le côté d'habitacle 1.

Le but de la présente invention est de remédier aux inconvénients exposés ci-dessus.

Ce but est atteint, selon l'invention, grâce à un dispositif de soudage laser pour assembler par soudo-brasage une première pièce en tôle à une seconde pièce en tôle, comportant un bâti supportant une tête émettrice d'un faisceau laser, et une buse d'apport de fil de soudage, adaptés pour réaliser un cordon de soudage le long d'une ligne de jonction entre lesdites première et seconde pièces en tôle, ledit bâti portant en outre un galet presseur adapté pour presser l'une desdites pièces contre l'autre pièce, ce galet presseur étant situé en amont du faisceau laser relativement au sens de déplacement du faisceau laser le long de ladite ligne de jonction, caractérisé en ce que le bâti porte en outre, un second galet presseur dont la position est décalée par rapport à celle du premier galet presseur relativement au sens de déplacement du faisceau laser.

Quelque soit le sens du décalage du second galet presseur par rapport au premier galet presseur, ces deux galets permettent de répartir la pression sur une plus grande longueur des deux pièces à assembler, ce qui permet d'éviter des défauts de marquage nuisibles à l'égard de la qualité et de l'esthétique.

Dans une version préférée de l'invention, le second galet presseur est situé entre le premier galet presseur et le faisceau laser.

Cette position du second galet presseur permet de remédier aux inconvénients décrits plus haut, en référence aux figures 4 et 5.

A cet effet, il est préférable que le second galet presseur soit situé près du faisceau laser.

De préférence également, les deux galets presseurs sont adaptés pour presser l'une desdites pièces contre l'autre pièce suivant une ligne parallèle à la ligne de jonction entre les deux pièces.

Dans un mode de réalisation avantageux de l'invention, chacun des deux galets est porté par un bras monté pivotant par rapport au bâti, ce bras étant sollicité par un vérin entre une position dans laquelle le galet porté par le bras applique une pression sur la pièce et une position escamotée par rapport à cette pièce et chacun des deux vérins est commandé indépendamment de l'autre vérin.

Ainsi, on peut déplacer l'un des galets vers la position escamotée, lorsque le faisceau laser atteint une zone dans laquelle, il n'est pas nécessaire de solliciter en pression les deux galets presseurs.

Selon un autre aspect, l'invention concerne également l'application du dispositif de soudage laser selon l'invention :
- au soudage du pavillon d'un véhicule automobile, le long d'une ligne de jonction comprise entre un bord longitudinal de ce pavillon et le bord d'un côté d'habitacle du véhicule ;
- au soudage du support en tôle de la vitre d'un pavillon vitré d'un véhicule automobile, le long d'une ligne de jonction comprise entre un bord longitudinal de ce support et le bord d'un côté d'habitacle du véhicule.

En particulier, l'invention vise l'application du dispositif de soudage laser selon l'invention, dans laquelle :
- une partie du bord longitudinal dudit support en tôle de la vitre est soudée par points au bord du côté d'habitacle et la partie restante est soudée audit bord au moyen dudit dispositif de soudage laser ;
- une partie du pavillon en tôle est située à l'arrière dudit support en tôle de la vitre et dans laquelle un cordon de soudage est réalisé en continu au moyen dudit dispositif de soudage laser sur ladite partie restante du bord du support de la vitre et sur le bord dudit pavillon arrière en tôle.

D'autres particularités et avantages de l'invention apparaîtront encore tout au long de la description ci-après.

Aux dessins annexés, donnés à titre d'exemples, non limitatifs :
- la figure 6 est une vue partielle en perspective d'un dispositif de soudage laser selon l'invention,
- la figure 7 est une vue schématique latérale du dispositif de soudage laser selon l'invention, en position opérationnelle sur un pavillon arrière et sur un support de vitre d'un véhicule automobile.

Le dispositif de soudage laser représenté sur les figures 6 et 7 est destiné à être déplacé au moyen d'un robot pour réaliser l'assemblage par soudo-brasage entre (voir figure 7) un pavillon arrière 2 et un support de vitre 3 et un côté d'habitacle 1 d'un véhicule automobile.

Ce dispositif de soudage au laser comprend un bâti 5 supportant une tête 6 émettrice d'un faisceau laser 7 et une buse 8 d'apport de fil de soudage 9, adaptés pour réaliser un cordon de soudage le long d'une ligne de jonction entre le pavillon 2, le support 3 et le côté d'habitacle 1.

Le bâti 5 porte en outre un premier galet presseur 10 sollicité par un vérin 11 pour presser la tôle de pavillon 2 ou le support 3 contre le côté d'habitacle 1.

Le premier galet presseur 10 est situé en amont du faisceau laser 7 relativement au sens F de déplacement du faisceau laser 7 le long de ladite ligne de jonction entre les éléments 2, 3 et 1 ci-dessus.

Conformément à l'invention, le bâti 5 du dispositif de soudage laser porte en outre, un second galet presseur 12 sollicité par un vérin 13, dont la position est décalée par rapport à celle du premier galet presseur 10 relativement au sens F de déplacement du faisceau laser 7.

Comme montré par les figures 6 et 7, le second galet presseur 12 est situé entre le premier galet presseur 10 et le faisceau laser 7 et est situé près de ce faisceau laser 7.

Les deux galets presseurs 10 et 12 sont adaptés pour presser les tôles 2 et 3 contre la tôle du côté d'habitacle suivant une ligne parallèle à la ligne de jonction entre les tôles ci-dessus.

La figure 6 montre par ailleurs, que chacun des deux galets 10, 12 est porté par un bras 14, 15 monté pivotant par rapport au bâti 5.

Chacun des bras 14, 15 est sollicité par un vérin 11, 13 par exemple pneumatique entre une position dans laquelle le galet 10, 12 porté par le bras 14, 15 applique une pression sur la tôle 2 ou 3 et une position escamotée par rapport à cette tôle.

Chacun des deux vérins 11, 13 peut être commandé indépendamment de l'autre vérin pour rendre chacun des galets 10, 12, soit inactif, soit opérationnel.

Lorsque les deux galets 10, 12 sont opérationnels, c'est-à-dire en position d'appui sur la tôle 2 ou 3, l'effort appliqué par les deux galets 10, 12 est mieux réparti sur la tôle, ce qui permet de réduire les marques dues aux galets et ainsi d'améliorer la qualité de l'assemblage.

Cependant, le principal avantage du dispositif de soudage laser selon l'invention est illustré par la figure 7.

Cette figure 7 montre que lorsque le premier galet presseur 10 est déjà en appui sur la tôle du support 3, le second galet presseur 12 est encore en appui sur la partie de la tôle du pavillon 2 située entre le faisceau laser 7 et le bord avant 2a du pavillon 2.

Ainsi grâce à la pression exercée par le second galet 12, cette partie de la tôle du pavillon 2 ne risque pas de se soulever, ce qui aurait pour conséquence d'engendrer un soudage défectueux, comme expliqué dans le cas de la figure 4.

Pour les mêmes raisons, le second galet 12 permet également d'éviter les inconvénients évoqués plus haut en référence à la figure 5.

Bien entendu, le dispositif de soudage laser peut être appliqué pour souder des pavillons normaux c'est-à-dire s'étendant d'une seule pièce en tôle entre le pare-brise et le bord arrière du toit d'un véhicule automobile.

L'invention peut également s'appliquer au soudage laser de pièces en tôle dans des applications autres que le domaine des véhicules automobiles.

## Revendications

1. Dispositif de soudage laser pour assembler par soudo-brasage une première pièce en tôle à une seconde pièce en tôle, comportant un bâti (5) supportant une tête (6) émettrice d'un faisceau laser (7), et une buse (8) d'apport de fil de soudage (9), adaptés pour réaliser un cordon de soudage le long d'une ligne de jonction entre lesdites première et seconde pièces en tôle, ledit bâti (5) portant en outre un galet presseur (10) adapté pour presser l'une desdites pièces contre l'autre pièce, ce galet presseur (10) étant situé en amont du faisceau laser (7) relativement au sens (F) de déplacement du faisceau laser (7) le long de ladite ligne de jonction, le bâti (5) portant en outre, un second galet presseur (12) dont la position est décalée par rapport à celle du premier galet presseur (10) relativement au sens (F) de déplacement du faisceau laser (7), **caractérisé en ce que** le second galet presseur (12) est situé entre le premier galet presseur (10) et le faisceau laser (7).

2. Dispositif de soudage laser selon la revendication 1, **caractérisé en ce que** les deux galets presseurs (10, 12) sont adaptés pour presser l'une desdites pièces contre l'autre pièce suivant une ligne parallèle à la ligne de jonction entre les deux pièces.

3. Dispositif de soudage laser selon la revendication 1 à 2, **caractérisé en ce que** chacun des deux galets (10, 12) est porté par un bras (14, 15) monté pivotant par rapport au bâti (5), ce bras (14, 15) étant sollicité par un vérin (11, 13) entre une position dans laquelle le galet (10, 12) porté par le bras (14, 15) applique une pression sur la pièce et une position escamotée par rapport à cette pièce.

4. Dispositif de soudage laser selon la revendication 3, **caractérisé en ce que** chacun des deux vérins (11, 13) est commandé indépendamment de l'autre vérin.

5. Application du dispositif de soudage laser selon l'une des revendications 1 à 4 au soudage du pavillon (2) d'un véhicule automobile, le long d'une ligne de jonction comprise entre un bord longitudinal de ce pavillon (2) et le bord d'un côté d'habitacle (1) du véhicule.

6. Application du dispositif de soudage laser selon l'une des revendications 1 à 4 au soudage du support en tôle (3) de la vitre d'un pavillon vitré d'un véhicule automobile, le long d'une ligne de jonction comprise entre un bord longitudinal de ce support (3) et le bord d'un côté d'habitacle (1) du véhicule.

7. Application selon la revendication 6, dans laquelle une partie du bord longitudinal dudit support en tôle (3) de la vitre est soudée par points (12a) au bord du côté d'habitacle (1) et la partie restante est soudée audit bord au moyen dudit dispositif de soudage laser.

8. Application selon la revendication 7, dans laquelle une partie de pavillon (2) en tôle est située à l'arrière dudit support en tôle (3) de la vitre et dans laquelle un cordon de soudage est réalisé en continu au moyen dudit dispositif de soudage laser sur ladite partie restante du bord du support (3) de la vitre et sur le bord dudit pavillon arrière (2) en tôle.

## Patentansprüche

1. Laserschweißvorrichtung zum Verbinden eines ersten Blechteiles mit einem zweiten Blechteil durch Lötschweißen, ein Gehäuse (5) umfassend, das einen Kopf (6) zur Abgabe eines Laserstrahls (7), und eine Düse (8) zum Beibringen des Schweißdrahtes (9) trägt, die sich dazu eignen, eine Schweißnaht entlang einer Verbindungslinie zwischen dem besagten ersten und zweiten Blechteil zu erzeugen, wobei das besagte Gehäuse (5) darüber hinaus eine Andruckrolle (10) trägt, die sich dazu eignet, um eines der besagten Teile auf das andere Teil zu drücken, wobei diese Andruckrolle (10) im Verhältnis zur Bewegungsrichtung (F) des Laserstrahls (7) entlang der Verbindungslinie vor dem Laserstrahl (7) angeordnet ist, wobei das Gehäuse (5) darüber hinaus eine zweite Andruckrolle (12) trägt, deren Position im Verhältnis zu jener der ersten Andruckrolle (10) im Verhältnis zur Bewegungsrichtung (F) des Laserstrahls (7) versetzt ist, **dadurch gekennzeichnet, dass** die zweite Andruckrolle (12) zwischen der ersten Andruckrolle (10) und dem Laserstrahl (7) angeordnet ist.

2. Laserschweißvorrichtung nach Anspruch 1, **dadurch gekennzeichnet, dass** sich die beiden Andruckrollen (10, 12) dazu eignen, um das eine der besagten Teile entlang einer Linie auf das andere Teil zu drücken, die parallel zur Verbindungslinie zwischen den beiden Teilen verläuft.

3. Laserschweißvorrichtung nach dem Anspruch 1 bis 2, **dadurch gekennzeichnet, dass** jede der beiden Rollen (10, 12) von einem Arm (14, 15) getragen wird, der im Verhältnis zum Gehäuse (5) schwenkbar montiert ist, wobei dieser Arm (14, 15) durch einen Zylinder (11, 13) zwischen einer Position, in der die vom Arm (14, 15) getragene Rolle (10, 12) einen Druck auf das Teil ausübt, und einer Position angesteuert wird, die im Verhältnis zu diesem Teil eingezogen ist.

4. Laserschweißvorrichtung nach dem Anspruch 3, **dadurch gekennzeichnet, dass** jeder der beiden Zylinder (11, 13) unabhängig vom anderen Zylinder gesteuert wird.

5. Anwendung der Laserschweißvorrichtung nach einem der Ansprüche 1 bis 4 zum Schweißen des Daches (2) eines Kraftfahrzeugs, entlang einer Verbindungslinie zwischen einem Längsrand dieses Daches (2) und dem Rand einer Innenraumseite (1) des Fahrzeugs.

6. Anwendung der Laserschweißvorrichtung nach einem der Ansprüche 1 bis 4 zum Schweißen des Halteblechs (3) der Scheibe eines Glasdaches eines Kraftfahrzeugs, entlang einer Verbindungslinie zwischen einem Längsrand dieses Halteblechs (3) und dem Rand einer Innenraumseite (1) des Fahrzeugs.

7. Anwendung nach Anspruch 6, wobei ein Abschnitt des Längsrandes des besagten Halteblechs (3) der Scheibe am Rand der Innenraumseite (1) punktgeschweißt wird und der verbleibende Abschnitt mit der besagten Laserschweißvorrichtung am besagten Rand angeschweißt wird.

8. Anwendung nach Anspruch 7, wobei sich ein Dachabschnitt (2) aus Blech hinten am besagten Halteblech (3) der Scheibe befindet und wobei mit der besagten Laserschweißvorrichtung auf dem besagten verbleibenden Abschnitt des Randes des Halteblechs (3) der Scheibe und auf dem Rand des besagten hinteren Daches (2) aus Blech eine durchgehende Schweißnaht erzeugt wird.

## Claims

1. Laser welding device for connecting a first sheet-metal part to a second sheet-part metal part by braze welding, comprising a frame (5) supporting a head (6) emitting a laser beam (7), and a nozzle (8) supplying welding wire (9), suitable for producing a welding bead along a junction line between said first and second sheet-metal parts, said frame (5) also carrying a pressing roller (10) suitable for pressing one of said parts against the other part, this pressing roller (10) being situated upstream of the laser beam (7) relative to the direction (F) of movement of the laser beam (7) along said junction line, the frame (5) also carrying a second pressing roller (12), the position of which is offset with respect to that of the first pressing roller (10) relative to the direction (F) of movement of the laser beam (7), **characterised in that** the second pressing roller (12) is situated between the first pressing roller (10) and the laser beam (7).

2. Laser welding device according to claim 1, **characterised in that** the two pressing rollers (10, 12) are suitable for pressing one of said parts against the other part along a line parallel to the junction line between the two parts.

3. Laser welding device according to claim 1 or 2, **characterised in that** each of the two rollers (10, 12) is carried by an arm (14, 15) mounted so as to pivot with respect to the frame (5), this arm (14, 15) being urged by an actuator (11, 13) between a position in which the roller (10, 12) carried by the arm (14, 15) applies a pressure on the part and a position retracted with respect to this part.

4. Laser welding device according to claim 3, **characterised in that** each of the two actuators (11, 13) is controlled independently of the other actuator.

5. Application of the laser welding device according to one of claims 1 to 4 to the welding of the roof (2) of a motor vehicle, along a junction line lying between a longitudinal edge of this roof (2) and the edge of a passenger-compartment side (1) of the vehicle.

6. Application of the laser welding device according to one of claims 1 to 4 to the welding of the sheet-metal support (3) of the window of a glazed roof of a motor vehicle, along a junction line lying between a longitudinal edge of this support (3) and the edge of a passenger-compartment side (1) of the vehicle.

7. Application according to claim 6, in which part of the longitudinal edge of said sheet-metal support (3) of the window is spot welded (12a) to the edge of the passenger-compartment side (1) and the remaining part is welded to said edge by means of said laser welding device.

8. Application according to claim 7, in which a sheet-metal roof part (2) is situated at the rear of said sheet-metal support (3) of the window and in which a welding bead is produced continuously by means of said laser welding device on said remaining part of the edge of the support (3) of the window and on the edge of said sheet-metal rear roof (2).
